# EUROPEAN PATENT APPLICATION

(11) **EP 4 142 120 A1**
(43) Date of publication of application: **01.03.2023**
(21) Application number: 21193719.8
(22) Date of filing: 30.08.2021
(51) Int. Cl.: H02K 7/18, F03D 9/25, H02J 3/38, H02K 16/04, H02K 11/04, H02K 3/28, H02K 1/14

(54) **WINDING CONNECTIONS FOR A GENERATOR OF A WIND TURBINE**

(71) Applicant: Siemens Gamesa Renewable Energy A/S, 7330 Brande (DK)
(72) Inventor: Goldenbaum, Nikolaus, 8680 Ry (DK); Groendahl, Erik, 8653 Them (DK); Rasmussen, Brian, 7323 Give (DK); Thomsen, Thyge Skovbjerg, 7400 Herning (DK)
(74) Representative: SGRE-Association

(57) **Abstract**

The present invention describes a wind turbine (1) comprising at least one electric generator (11) having at least one winding system (41, 42), each winding system (41, 42) comprising a plurality of sub-winding systems (41a,b; 42a,b), and a power converter system (51, 52, 53, 54) for connecting the plurality of winding systems (41, 42) to a fixed frequency AC or DC system (200), the power converter system (51, 52, 53, 54) comprising a plurality of power converter channels (51, 52, 53, 54). Each of the sub-winding systems (41a,b; 42a,b) is galvanically isolated from the other sub-winding systems (41a,b; 42a,b) and is connected to at least one respective power converter channel (51, 52, 53, 54). Each winding system (41, 42) comprises at least one breaker (61, 62) for connecting one sub-winding system (41a,b; 42a,b) to another sub-winding system (41a,b; 42a,b).

## Description

### Field of invention

The invention relates to a wind turbine comprising an electric generator and a power converter system for transmitting the total active power from the generator to a fixed frequency AC or DC system. The power converter system comprises a plurality of power converter channels. The invention further relates to a method for operating such a wind turbine.

### Art Background

The trend in the field of wind turbines, more particularly offshore wind turbines, has for many years been towards higher and higher active power ratings.

Increasing the active power rating of a wind turbine can (electrically) be achieved by either increasing the total current, increasing the system voltages or a combination thereof. Both approaches have drawbacks in terms of implementation complexity and total system lifetime cost (i.e. costs including initial investment as well as life time operational cost and the value of inherent system losses). Furthermore, available component limitations (e.g. maximum current in a single breaker) confine the solution space for how an actual system can be implemented.

If the current rating is increased, the number of components (in particular, breakers) available on the market to handle the needed current are reduced. Furthermore, designs of electrical connections become more challenging. This leads to designs where the main current is split between several parallel branches each carrying a fraction of the total current in the electric generator, as shown in EP 2492504. This means that for a system which consists of n parallel branches each of the branches will carry approximately an n^{th} of the total turbine current.

Generally, a galvanic isolation between parallel power converters offers a higher degree of flexibility in terms of grounding schemes and how the switching elements in the individual converters are controlled. However, increasing the requirements on the generator for multiple galvanically isolated windings restricts the possible optimization of the generator in terms of winding/conductor routing and/or redundancy in the event of partial converter system failure which is also undesirable. A compromise between optimization of the generator and of the converter system is therefore necessary.

It is therefore desirable to connect a generator more efficiently to a power converter system by means of a plurality of connections.

### Summary of the Invention

This objective may be solved by the wind turbine and the method for operating a wind turbine according to the independent claims. Advantageous embodiments of the present invention are described by the dependent claims.

According to a first aspect of the present invention a wind turbine is provided, which comprises at least one electric generator having at least one winding system, each winding system comprising a plurality of sub-winding systems, and a power converter system for connecting the plurality of winding systems to a fixed frequency AC or DC system, the power converter system comprising a plurality of power converter channels. Each of the sub-winding systems is galvanically isolated from the other sub-winding systems and is connected to at least one respective power converter channel. Each winding system comprises at least one breaker for connecting one sub-winding system to another sub-winding system.

The permanent magnet machine may be an electrical generator. Particularly, but not exclusively, the electrical generator may be used in a wind turbine.

According to a second aspect of the present invention a method of operating the above-described wind turbine is provided, the method comprising the step of equally distributing the amount of electric power generated by the electric generator to all power converter channels.

With "winding system" it is meant a system of wound conductors within the generator covering the complete circumference of the generator about its rotational axis. A generator comprise of one or more winding systems and each winding system may comprise of a plurality of n sub-winding systems (e.g. two sub-winding systems, each sub-winding systems covering an angle of 180 degrees). The winding system my be a concentrated or distributed winding system.

With "power converter channel" it is meant a converter capable of "channelling" a fraction of the total active power from the generator to a fixed frequency AC or DC system, for example a three phase AC or DC system like an electrical grid. A power converter system is a complete system capable of transmitting the total active power from the generator to a fixed frequency AC or DC system. A power converter system may include a plurality of n power converter channels, each covering 1/n^{th} of the total active power.

According to the present invention, the winding system (including concentrated or distributed windings) is connected to the power converter system in such way that:
- balanced operation of a generator in normal operation, i.e. maintaining one or more main winding systems which each cover the entire circumference of the generator;
- relatively simple connection layout (relatively low number of individual conductors and connectors);
- relatively low conductor material consumption (conductor square section and length).

In this embodiment, the electric system associated with the generator may have a layout which consists of a plurality of winding systems. Each winding system is divided into a plurality of sub-winding systems which are electrical separated from each other. There may be any number n of sub-winding systems within a winding system, each sub-winding system covering (360°)/n. A plurality of parallel power converter channels may be connected to the generator without being galvanically coupled to each other.

According to an embodiment of the present invention, the power converter channels are also n for each winding system, each sub-winding system being connected to only one power converter channel.

According to embodiments of the present invention, each winding system comprises n - 1 breakers between the n sub-winding systems for connecting the n sub-winding systems to each other or separating the n sub-winding systems from each other.

According to embodiments of the present invention, each winding system comprises one or more breakers, each breaker connecting a respective pair of sub-winding systems.

According to embodiments of the method of the present invention, if a power converter channel connected to a first winding system fails, the sub-winding system connected the failed power converter channel is connected to at least another sub-winding system of the first winding system. This may be done by operating the breaker to connect the sub-winding system connected to the failed power converter channel to at least another sub-winding system of the same winding system.

The electric generator can further operate even after a failure of a power converter channel, at a percentage of its nominal power. Such percentage depends on the number power converter channels in the power converter system. For example, if each winding system comprises of two sub-winding systems, each sub-winding system being connected to a respective power converter channel, the electrical generator can be operated at least 50% of its nominal power, each time a power converter channel fails.

### Brief Description of the Drawings

The aspects defined above, and further aspects of the present invention are apparent from the examples of embodiment to be described hereinafter and are explained with reference to the examples of embodiment. The invention will be described in more detail hereinafter with reference to examples of embodiment but to which the invention is not limited.
- Figure 1: shows a schematic section of a wind turbine including an electric generator connected to a power converter system according to the present invention.
- Figure 2: shows an electric schematic diagram of an electric generator connected to a power converter system according to a first embodiment of the present invention.
- Figure 3: shows an electric schematic diagram of another embodiment of an electric generator connected to a power converter system according to the present invention, in a first operative configuration.
- Figure 4: shows the embodiment of figure 3, in a second operative configuration.
- Figure 5: shows an electric schematic diagram of an electric generator connected to a power converter system according to a second embodiment of the present invention.

### Detailed Description

The illustrations in the drawings are schematically. It is noted that in different figures, similar or identical elements are provided with the same reference signs.

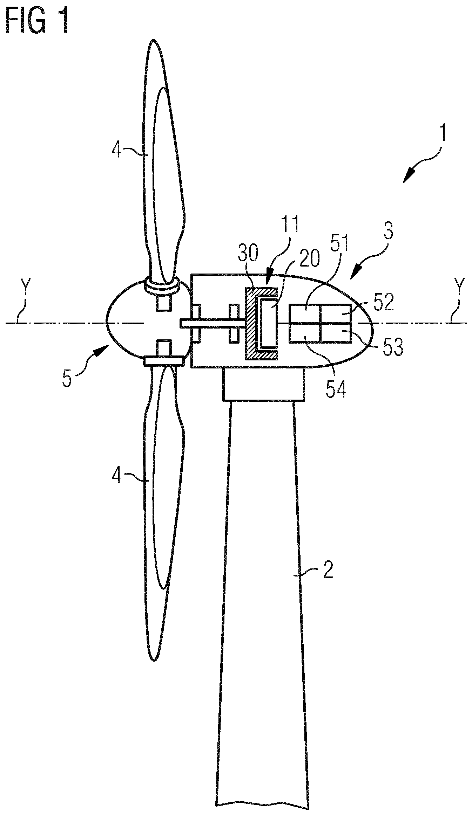

**Figure 1** shows a wind turbine 1 according to the invention. The wind turbine 1 comprises a tower 2, which is mounted on a non-depicted fundament. A nacelle 3 is arranged on top of the tower 2. The wind turbine 1 further comprises a wind rotor 5 having two, three or more blades 4 (in the perspective of Figure 1 only two blades 4 are visible). The wind rotor 5 is rotatable around a rotational axis Y. In general, when not differently specified, the terms axial, radial and circumferential in the following are made with reference to the rotational axis Y. The blades 4 extend radially with respect to the rotational axis Y.

The wind turbine 1 comprises an electric generator 11 connected to a power converter system, as better explained in the following. The power converter system comprises four electric power converter channels 51, 52, 53, 54. The wind rotor 5 is rotationally coupled with the electric generator 11 by means of a rotatable shaft. According to other possible embodiments of the present invention, the wind rotor 5 is rotationally coupled directly with the electric generator 11 (direct-drive generator configuration).

The electric generator 11 includes a stator 20 and a rotor 30. The rotor 30 is radially external to the stator 20 and is rotatable with respect to the stator 30 about the rotational axis Y. According to other embodiments of the present invention (not shown) the rotor is radially internal to the stator 11. According to other possible embodiments of the present invention (not represented in the attached figures), the present invention can be applied to an electric generator, which is not comprised in a wind turbine.

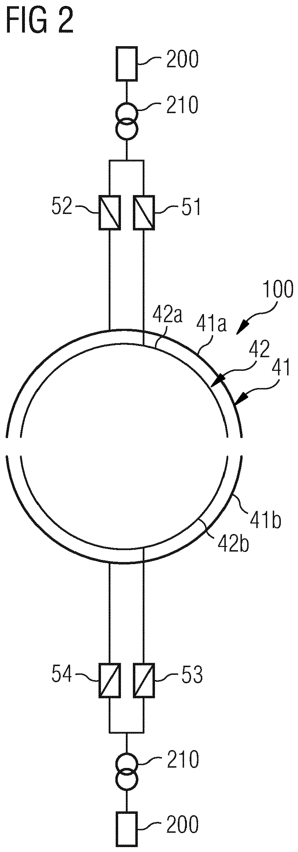

**Figure 2** shows schematically a first embodiment of a generator winding system 100 of the electric generator 11. The generator winding system 100 comprises two winding systems 41, 42. According to other embodiments of the invention (not shown), the generator winding system 100 comprises a plurality of winding systems greater than two. Each winding systems 41, 42 is three-phase system of conductors wound in the stator 20 and covering the complete circumference of the generator about the rotational axis Y. Each winding system 41, 42 comprises two respective sub-winding systems 41a,b and 42a,b. Each sub-winding system 41a,b and 42a,b is a three-phase system of conductors wound in the stator 20 and covering a fraction of the complete circumference of the generator about the rotational axis Y. In the embodiments of the attached figures 2 to 4, each sub-winding system 41a,b and 42a,b covers an angle of 180 degrees about the rotational axis Y. According to other embodiments of the invention (not shown), each winding system 41, 42 may comprise three respective sub-winding systems, each sub-winding system covering an angle of 120 degrees about the rotational axis Y. Each winding system 41, 42 may comprise n sub-winding systems, n being an integer greater than one, each sub-winding system covering an angle of 360°/n degrees around a rotational axis Y, in each sub-winding system being generated 1/n^{th} of the electrical power generated in the respective winding system 41, 42. In the embodiments of the attached figures 2 to 4, in each of the sub-winding systems 41a,b; 42a,b is generated a fourth of the electrical power generated in the electric generator 11, each winding system 41, 42 generating a half of the electrical power generated in the electric generator 11. Each of the sub-winding systems 41a,b; 42a,b is galvanically isolated from the other sub-winding systems 41a,b; 42a,b.

A power converter system 51, 52, 53, 54 is associated to the generator winding system 100 for connecting the plurality of winding systems 41, 42 to a fixed frequency AC or DC system 200. The fixed frequency AC or DC system 200 may be a three-phase grid 200. One or more transformers (two transformers 210 are shown in the attached figures 2 to 4) may be interposed between power converter system 51, 52, 53, 54 and the grid 200. The power converter system 51, 52, 53, 54 comprising a plurality of power converter channels (four converter channels 51, 52, 53, 54 in the embodiments of the attached figures 2 to 4). Each of the sub-winding systems 41a,b; 42a,b is electrically connected to one respective power converter channel 51, 52, 53, 54. According to other embodiments of the invention (not shown), each of the sub-winding systems 41a,b; 42a,b may be electrically connected to more than one respective power converter channel 51, 52, 53, 54.

Each winding system 41, 42 comprises at least a breaker 61, 62 between two sub-winding systems 41a,b; 42a,b of the respective winding system 41, 42. In the embodiment of the attached figures, each winding system 41, 42 comprises one respective breaker 61, 62, each breaker 61, 62 being interposed between the two sub-winding systems 41a,b; 42a,b of each winding system 41, 42. The breaker may be of the RCO (Residual Current Operated breaker) type. According to the embodiments of the invention (not shown) where each winding system 41, 42 comprises three respective sub-winding systems, two breakers may be provided for each winding system. Each breaker 61, 62 may be used in operation for connecting to each other the sub-winding systems 41a,b; 42a,b of a same winding system 41, 42 or for separating from each other the two sub-winding systems 41a,b; 42a,b of a same winding system 41, 42. According to embodiments of the present invention where each winding system 41, 42 comprises n respective sub-winding systems, each winding system comprises n - 1 breakers between the n sub-winding systems for connecting the n sub-winding systems to each other or separating the n sub-winding systems from each other.

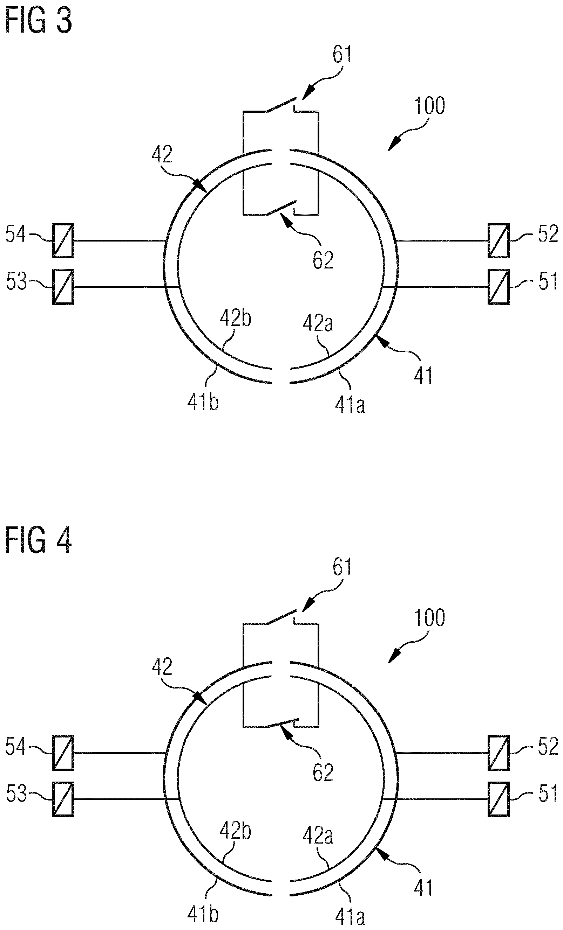

With reference to **Figure 3****,** the electric generator 11 is operating without faults. A method of operating the wind turbine 1 comprises the step of equally distributing the amount of electric power generated by the electric generator 11 to all the power converter channels 51, 52, 53, 54, i.e. a fourth of the generated power to each power converter channel 51, 52, 53, 54.

With reference to **Figure 4****,** the power converter channel 51 connected to one sub-winding system 42a is faulty. According to the method of operating the wind turbine 1, the breaker 62 in the respective winding system 42 is closed so that the sub-winding system 42a,b of the respective winding system 42 are connected to each other. Both the sub-winding system 42a,b of the respective winding system 42 are so connected to the one power converter channel 53, which is not faulty. Such power converter channel 53 is still operated to receive the same percentage of the generated power as before the faulty conditions, i.e., in the embodiment of figures 2 to 4, a fourth of the power generated before the faulty conditions. The winding system 42, connected to the faulty power converter channel 51, is therefore operated at a fourth of the total power generated before the faulty conditions. To balance operation, the other winding system 41 is also operated at the same power, i.e., in the embodiment of figures 2 to 4, a fourth of the total power generated before the faulty conditions. Such power is equally distributed between the power converter channels 52, 54 connected to the other winding system 41, each receiving, in the embodiment of figures 2 to 4, an eight of the total power generated before the faulty conditions.

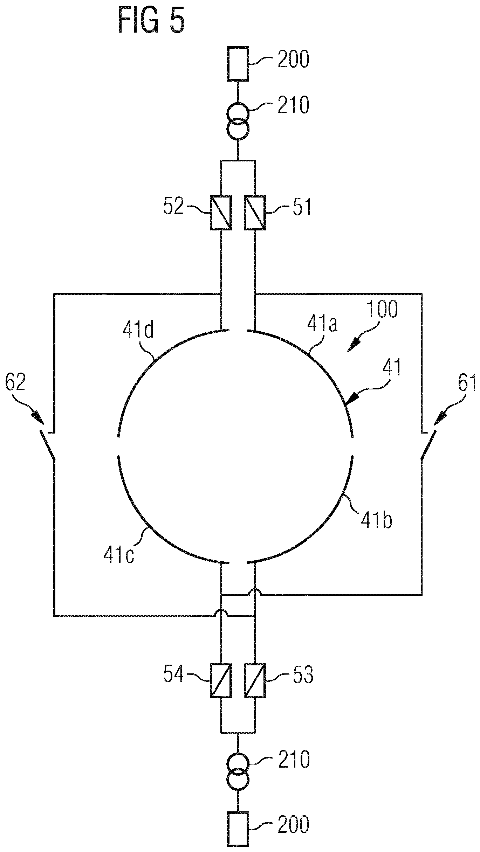

**Figure 5** shows schematically another embodiment of a generator winding system 100 of the electric generator 11. The generator winding system 100 comprises one winding systems 41. The winding system 41 is three-phase system of conductors wound in the stator 20 and covering the complete circumference of the generator about the rotational axis Y. The winding system 41 comprises four respective sub-winding systems 41a,b,c,d. Each sub-winding system 41a,b,c,d covers an angle of 90 degrees about the rotational axis Y. According to other embodiments of the invention (not shown), the winding system 41 may comprise m respective sub-winding systems, where m is an even integer, each sub-winding system covering an angle of 360°/m degrees around a rotational axis Y, in each sub-winding system being generated 1/m^{th} of the electrical power generated in the winding system 41. Each of the sub-winding systems 41a,b,c,d is galvanically isolated from the other sub-winding systems 41a,b,c,d. Each of the sub-winding systems 41a,b,c,d is electrically connected to one respective power converter channel 51, 52, 53, 54. According to other embodiments of the invention (not shown), each of the sub-winding systems 41a,b,c,d may be electrically connected to more than one respective power converter channel 51, 52, 53, 54.

The winding system 41 comprises two breakers 61, 62. Each breaker 61, 62 is arranged between a respective pair of sub-winding systems 41a,c; 41b,d. The sub-winding systems 41a,c; 41b,d of each pair are oppositely arranged with respect to the rotational axis Y. Each breaker 61, 62 may be used in operation for connecting to each other the sub-winding systems 41a,c; 41b,d of the same pair. According to the method of operating the wind turbine 1, if a power converter channel connected to one sub-winding system 41a,b,c,d is faulty the breaker which is connected to the respective sub-winding system is closed for connecting to each other the respective pair of sub-winding systems 41a,c; 41b,d. The pair of sub-winding systems 41a,c; 41b,d connected to the faulty power converter channel is therefore operated at a fraction (one fourth) of the total power generated before the faulty conditions. To balance operation, the other pair of sub-winding systems 41a,c; 41b,d is also operated at the same reduced power, i.e. a fourth of the total power generated before the faulty conditions. Such power is equally distributed between the respective power converter channels connected to the other (not faulty) pair of sub-winding systems 41a,c; 41b,d.

## Claims

1. A wind turbine (1) comprising at least one electric generator (11) having at least one winding system (41, 42), each winding system (41, 42) comprising a plurality of sub-winding systems (41a,b; 42a,b), and a power converter system (51, 52, 53, 54) for connecting the plurality of winding systems (41, 42) to a fixed frequency AC or DC system (200), the power converter system (51, 52, 53, 54) comprising a plurality of power converter channels (51, 52, 53, 54),
wherein each of the sub-winding systems (41a,b; 42a,b) is galvanically isolated from the other sub-winding systems (41a,b; 42a,b) and is connected to at least one respective power converter channel (51, 52, 53, 54) and wherein each winding system (41, 42) comprises at least one breaker (61, 62) for connecting one sub-winding system (41a,b; 42a,b) to another sub-winding system (41a,b; 42a,b).

2. The wind turbine according to claim 1, wherein the electric generator (11) comprises a plurality of winding systems (41, 42), each winding system (41, 42) comprising n sub-winding systems (41a,b; 42a,b), n being an integer greater than one, each covering an angle of 360°/n degrees around a rotational axis of the electric generator (11).

3. The wind turbine according to claim 1 or 2, wherein each winding system (41, 42) comprises at least a breaker (61, 62) between two sub-winding systems (41a,b; 42a,b) for connecting the two sub-winding systems (41a,b; 42a,b) to each other or separating the two sub-winding systems (41a,b; 42a,b) from each other.

4. The wind turbine according to claim 3, wherein each winding system (41, 42) comprises a plurality of n - 1 breakers (61, 62) between a plurality of n sub-winding systems (41a,b; 42a,b) for connecting the n sub-winding systems (41a,b; 42a,b) to each other or separating the n sub-winding systems (41a,b; 42a,b) from each other.

5. The wind turbine according to claim 3, wherein each winding system (41, 42) comprises one or more breakers (61, 62), each breaker (61, 62) connecting a respective pair of sub-winding systems (41a,b; 42a,b).

6. The wind turbine according to any of the previous claims, wherein each sub-winding system (41a,b; 42a,b) extends between two ends, one end being connected to the breaker (61, 62).

7. The wind turbine according to any of the previous claims, wherein each sub-winding systems (41a,b; 42a,b) is connected to one power converter channel (51, 52, 53, 54).

8. The wind turbine according to any of the previous claims, wherein the at least one winding system (41, 42) is a distributed or concentrated winding system (41, 42).

9. A method for operating the wind turbine (1) according to any of the preceding claims, the method comprising the step of equally distributing the amount of electric power generated by the electric generator (11) to all the power converter channels (51, 52, 53, 54).

10. The method according to claim 7, wherein
- if a power converter channel (51, 52, 53, 54) connected to a first winding system (41, 42) fails, the sub-winding system (41a,b; 42a,b) connected the failed power converter channel (51, 52, 53, 54) is connected to at least another sub-winding system (41a,b; 42a,b) of the first winding systems (41, 42).

11. The method according to claim 7, wherein a breaker (61, 62) is operated for connecting the sub-winding system (41a,b; 42a,b) connected the failed power converter channel (51, 52, 53, 54) to at least another sub-winding system (41a,b; 42a,b) .
